(19) Europäisches Patentamt
European Patent Office
Office européen des brevets

(11) Veröffentlichungsnummer : **0 361 255 B1**

(12) # EUROPÄISCHE PATENTSCHRIFT

(45) Veröffentlichungstag der Patentschrift :
**19.11.92 Patentblatt 92/47**

(51) Int. Cl.$^5$ : **C09K 19/60,** C09B 57/00

(21) Anmeldenummer : **89117202.5**

(22) Anmeldetag : **18.09.89**

(54) **Flüssigkristalline Mischungen, enthaltend einen Azulenquadratsäurefarbstoff.**

Die Akte enthält technische Angaben, die nach dem Eingang der Anmeldung eingereicht wurden und die nicht in dieser Patentschrift enthalten sind.

(30) Priorität : **23.09.88 DE 3832311**

(43) Veröffentlichungstag der Anmeldung :
**04.04.90 Patentblatt 90/14**

(45) Bekanntmachung des Hinweises auf die Patenterteilung :
**19.11.92 Patentblatt 92/47**

(84) Benannte Vertragsstaaten :
**CH DE FR GB IT LI NL**

(56) Entgegenhaltungen :
**EP-A- 0 187 015**
**EP-A- 0 196 919**
**EP-A- 0 310 080**
**GB-A- 2 140 023**

(73) Patentinhaber : **BASF Aktiengesellschaft**
**Carl-Bosch-Strasse 38**
**W-6700 Ludwigshafen (DE)**

(72) Erfinder : **Schrott, Wolfgang, Dr.**
**Bruesseler Ring 45**
**W-6700 Ludwigshafen (DE)**
Erfinder : **Beck, Karin Heidrun, Dr.**
**Dackenheimer Strasse 3**
**W-6700 Ludwigshafen (DE)**
Erfinder : **Etzbach, Karl-Heinz, Dr.**
**Carl-Bosch-Ring 55**
**W-6710 Frankenthal (DE)**
Erfinder : **Neumann, Peter, Dr.**
**Postfach 28**
**W-6800 Mannheim 31 (DE)**

EP 0 361 255 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Flüssigkristalline Mischungen, enthaltend einen Azulenquadratsäurefarbstoff

Die vorliegende Erfindung betrifft flüssigkristalline Mischungen, enthaltend eine Flüssigkristallmasse und einen Azulenquadratsäurefarbstoff der Formel I

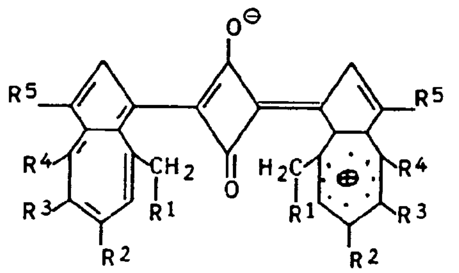

(I),

in der

$R^1$ $C_1$-$C_{12}$-Alkyl, das durch Halogen, Amino, Hydroxy, $C_1$-$C_{12}$-Alkoxy, Phenyl, durch $C_1$-$C_4$-Alkyl, $C_1$-$C_4$-Alkoxy, $C_1$-$C_4$-Dialkylamino, N-Phenyl-N-($C_1$-$C_4$-alkyl)-amino oder Halogen substituiertes Phenyl, Carboxyl, $C_1$-$C_{12}$-Alkoxycarbonyl, $C_1$-$C_{12}$-Halogenalkoxycarbonyl, Cyano, $C_1$-$C_{12}$-Alkanoyloxy, Benzoyloxy, durch $C_1$-$C_4$-Alkyl, $C_1$-$C_4$-Alkoxy, $C_1$-$C_4$-Dialkylamino, N-Phenyl-N-($C_1$-$C_4$-alkyl)amino oder Halogen, substituiertes Benzoyloxy und/oder den Rest

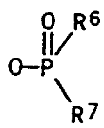

substituiert ist, wobei $R^6$ und $R^7$ gleich oder verschieden sind und unabhängig voneinander jeweils für $C_1$-$C_4$-Alkyl oder Phenyl stehen, Carboxyl, $C_1$-$C_{12}$-Alkoxycarbonyl, wobei die Alkylkette gegebenenfalls durch ein oder mehrere Sauerstoffatome unterbrochen ist, Carbamoyl, $C_1$-$C_4$-Mono- oder Dialkylcarbamoyl oder den Rest

L-O-CO-NH-$R^8$ ,

wobei L fur $C_1$-$C_{12}$-Alkylen, das gegebenenfalls durch Phenyl substituiert ist, und $R^8$ für $C_1$-$C_{20}$-Alkyl, $C_5$-$C_7$-Cycloalkyl, Phenyl oder durch $C_1$-$C_4$-Alkyl, $C_1$-$C_4$-Alkoxy, $C_1$-$C_4$-Dialkylamino, N-Phenyl-N-($C_1$-$C_4$-alkyl)amino oder Halogen substituiertes Phenyl stehen , und

$R^2$, $R^3$, $R^4$ und $R^5$ gleich oder verschieden sind und unabhängig voneinander jeweils Wasserstoff oder $C_1$-$C_{12}$-Alkyl, das gegebenenfalls durch Halogen, Amino, $C_1$-$C_{12}$-Alkoxy, Phenyl, durch $C_1$-$C_4$-Alkyl, $C_1$-$C_4$-Alkoxy, $C_1$-$C_4$-Dialkylamino, N-Phenyl-N-($C_1$-$C_4$-alkyl)amino oder Halogen substituiertes Phenyl, Carboxyl, $C_1$-$C_{12}$-Alkoxycarbonyl oder Cyano substituiert ist, bedeuten,

mit der Maßgabe, daß wenn $R^5$ Wasserstoff bedeutet, an einem oder beiden Azulenringen die Ringpositionen der Substituenten $CH_2$-$R^1$ und $R^4$ innerhalb eines Azulenrings auch gegeneinander vertauscht sein können und daß $R^1$ auch Wasserstoff bedeutet, wenn $R^5$ für Methyl oder Ethyl, das jeweils durch Phenyl oder durch $C_1$-$C_4$-Alkyl, $C_1$-$C_4$-Alkoxy, $C_1$-$C_4$-Dialkylamino, N-Phenyl-N-($C_1$-$C_4$-alkyl)amino oder Halogen substituiertes Phenyl substituiert ist, oder für $C_3$-$C_{12}$-Alkyl steht oder wenn mindestens einer der beiden Reste $R^2$ und $R^4$ für Phenyl oder durch $C_1$-$C_4$-Alkyl, $C_1$-$C_4$-Alkoxy, $C_1$-$C_4$-Dialkylamino, N-Phenyl-N-($C_1$-$C_4$-alkyl)-amino oder Halogen substituiertes Phenyl steht.

Weiterhin betrifft die Erfindung die Verwendung der obengenannten flüssigkristallinen Mischungen zur Herstellung von Flüssigkristalldisplays.

Flüssigkristalline Materialien, die pleochroitische Farbstoffe enthalten, sind bekannt. Solche Materialien finden Anwendung in Displays. Die Grundlagen dazu sind beispielsweise in Handbook of Liquid Crystals S. 611 ff (1980), Mol. Cryst. Liq. Cryst. Vol. 55, S. 51 ff (1979), Elektronik 14, S. 66 ff (1982) oder in den dort genannten Veröffentlichungen beschrieben.

Weiterhin sind bereits Flüssigkristalldisplays, wie das statische Bild-LC-Display, bekannt, das über eine hohe Auflösung verfügt. Dabei werden Laserstrahlen durch ein Signal von einem optischen Bild, das wiedergegeben werden soll, z.B. ein Videosignal, moduliert und auf eine Flüssigkristallzelle gelenkt, um das wiederzugebende optische Bild in eine Flüssigkristallzelle einzuschreiben. Anschließend kann durch Bestrahlen mit

Licht das optische Bild auf einen Bildschirm projeziert werden.

In solch einem Display liegt die Flüssigkristallmischung normalerweise in der smektischen Phase vor, die durch Bestrahlen mit einem Laser Phasenübergänge in den nematischen und schließlich in den isotropen Bereich aufweist.

Wenn der erhitzte Teil des Flüssigkristalls nach der Bestrahlung mit dem Laser gequencht wird, reorientieren sich die Moleküle dieses Teils nicht, sondern bilden eine gestörte Textur. Diese intensiv streuende Textur wird beim Einschreiben genutzt. Der Einschreibevorgang geht einher mit der Erzeugung dieser intensiv streuenden Textur in der Flüssigkristallmatrix, und zwar in Form von Spots mit geringem Durchmesser. Der zugefügte Farbstoff bewirkt eine bessere Auflösung und erhöht die absorption der Lichtenergie. Das eingeschriebene Bild kann gelöscht werden, wenn man die Textur wieder in die ursprüngliche Form, d.h. in die einheitlich geordnete smektische Phase überführt. Dies geschieht z.B. durch Anlegen eines elektrischen Feldes oder durch Erhitzen.

Will man in einem derartigen Flüssigkristalldisplay aktuelle Bilder speichern, so ist es notwendig, daß das Wiederbeschreiben des statischen Bildes schnell erfolgt. Dazu wiederum muß die Effizienz der Temperaturübertragung gesteigert werden. Dies erreicht man im allgemeinen durch eine optimale Lichtabsorption des Schreiblaserstrahls in der Flüssigkristallzelle.

Aufgrund dessen sollte eine Flüssigkristallzelle dieser Art solche Farbstoffe enthalten, die

- ein Absorptionsmaximum im Wellenlängenbereich eines Halbleiterstrahls, d.h. zwischen ca. 700 und 900 nm aufweisen,
- ein ausreichend hohes Absorptionsmaximum besitzen,
- eine große Durchlässigkeit im sichtbaren Wellenlängenbereich aufweisen,
- im Flüssigkristall löslich sind und
- die Eigenschaft des Dichroismus aufweisen.

Aus der EP-A-196 919 und der DE-A-3 415 638 sind bereits flüssigkristalline Mischungen bekannt, die Azulenquadratsäurefarbstoff enthalten.

Es hat sich jedoch gezeigt, daß die dort beschriebenen Farbstoffe eine ungenügende Löslichkeit aufweisen.

Weiterhin beschreibt die EP-A 187 015 flüssigkristalline Mischungen, die als Chromophor Azulenquadratsäurefarbstoffe mit unsubstituierten Alkylgruppen enthalten.

Aufgabe der vorliegenden Erfindung war es nun, neue flüssigkristalline Mischungen bereitzustellen, die Azulenquadratsäurefarbstoffe enthalten und die vorteilhafte anwendungstechnische Eigenschaften, insbesondere die oben aufgeführten Parameter aufweisen.

Demgemäß wurden die oben näher bezeichneten flüssigkristallinen Mischungen gefunden.

Alle in den Azulenquadratsäurefarbstoffen der Formel I auftretenden Alkyl-und Alkylengruppen können sowohl geradkettig als auch verzweigt sein.

Wenn in den Azulenquadratsäurefarbstoffen der Formel I substituierte Phenylgruppen auftreten, kommen als Substituenten beispielsweise $C_1$-$C_4$-Alkyl, $C_1$-$C_4$-Alkoxy, $C_1$-$C_4$-Dialkylamino, N-Phenyl-N-($C_1$-$C_4$-alkyl) amino oder Halogen in Betracht.

Wenn in den Azulenquadratsäurefarbstoffen der Formel I durch Sauerstoffatome unterbrochene Alkylgruppen auftreten, sind solche bevorzugt, die durch 1 bis 3 Sauerstoffatome unterbrochen sind.

Unter Halogen ist vorzugsweise jeweils Fluor, Chlor oder Brom zu verstehen.

Die Reste $R^2$, $R^3$, $R^4$, $R^5$ und $R^8$ in Formel I sind beispielsweise Methyl, Ethyl, Propyl, Isopropyl, Butyl, Isobutyl, sec-Butyl, tert-Butyl, Pentyl, Isopentyl, Neopentyl, tert-Pentyl, 2-Methylbutyl, Hexyl, 2-Methylpentyl, Isohexyl, Heptyl, Octyl, 2-Ethylhexyl, Isooctyl, Nonyl, Isononyl, Decyl, Isodecyl, Undecyl oder Dodecyl.

Reste $R^2$, $R^3$, $R^4$ und $R^5$ sind weiterhin, wie auch Reste $R^1$, z.B. Fluormethyl, Chormethyl, Difluormethyl, Trifluormethyl, Trichlormethyl, 2-Fluorethyl, 2-Chlorethyl, 2-Bromethyl, 1,1,1-Trifluorethyl, Heptafluorpropyl, 4-Chlorbutyl, 5-Fluorpentyl, 6-Chlorhexyl, Cyanomethyl, 2-Cyanoethyl, 3-Cyanopropyl, 2-Cyanobutyl, 4-Cyanobutyl, 5-Cyanopentyl, 6-Cyanohexyl, 2-Aminoethyl, 2-Aminopropyl, 3-Aminopropyl, 2-Aminobutyl, 4-Aminobutyl, 5-Aminopentyl, 6-Aminohexyl; 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Ethoxypropyl, 2- oder 4-Ethoxybutyl, 2- oder 4-Isopropoxybutyl, 5-Ethoxypentyl, 6-Methoxyhexyl, Benzyl, 1-Phenylethyl, 2-Phenylethyl, 4-Chlorbenzyl, 4-Methoxybenzyl, 2-(4-Methylphenyl)ethyl, Carboxymethyl, 2-Carboxyethyl, 3-Carboxypropyl, 4-Carboxybutyl, 5-Carboxypentyl, 6-Carboxyhexyl, Methoxycarbonylmethyl, Ethoxycarbonylmethyl, 2-Methoxycarbonylethyl, 2-Ethoxycarbonylethyl, 3-Methoxycarbonylpropyl, 3-Ethoxycarbonylpropyl, 4-Methoxycarbonylbutyl, 4-Ethoxycarbonylbutyl, 5-Methoxycarbonylpentyl, 5-Ethoxycarbonylpentyl, 6-Methoxycarbonylhexyl, 6-Ethoxycarbonylhexyl, 1-Methoxycarbonylethyl, 1-Ethoxycarbonylethyl, 1-Propoxycarbonylethyl, 1-Isopropoxycarbonylethyl, 1-Butoxycarbonylethyl, 1-Isobutoxycarbonylethyl, 1-sec-Butoxycarbonylethyl, 1-Methoxycarbonylpropyl, 1-Ethoxycarbonylpropyl, 1-Propoxycarbonylpropyl, 1-Isopropoxycarbonylpropyl, 1-Butoxycarbonylpropyl, 1-Isobutoxycarbonylpropyl, 1-sec-Butoxycarbonylpropyl. Benzyloxycarbonylmethyl, 2-Benzyloxycarbonylethyl, (2-Phenylethoxy)carbonylmethyl, 2-[(2-Phenylethoxy)carbonyl]ethyl oder 2-(2-Bromethoxycarbonyl)ethyl.

$R^8$ ist weitherhin z.B. 4-Methylphenyl, 4-Methoxyphenyl, 4-Chlorphenyl Tridecyl, Isotridecyl, Tetradecyl, Pentadecyl, Hexadecyl, Heptadecyl, Octadecyl, Nonadecyl, Eicosyl, Cyclopentyl, Cyclohexyl, Cycloheptyl oder Methylcyclohexyl.

$R^1$ in Formel I ist weiterhin z. B. 2-Hydroxyethyl, 2-Hydroxypropyl, 3-Hydroxypropyl, 2-Hydroxybutyl, 4-Hydroxybutyl, 5-Hydroxypentyl, 6-Hydroxyhexyl, Methoxycarbonyl, Ethoxycarbonyl, Propoxycarbonyl, Isopropoxycarbonyl, Butoxycarbonyl, Isobutoxycarbonyl, sec-Butoxycarbonyl, tert-Butoxycarbonyl, Pentyloxycarbonyl, Isopentyloxycarbonyl, Neopentyloxycarbonyl, tert-Pentyloxycarbonyl, Hexyloxycarbonyl, Isohexyloxycarbonyl, Heptyloxycarbonyl, Octyloxycarbonyl, Isooctyloxycarbonyl, Nonyloxycarbonyl, Isononyloxycarbonyl, Decyloxycarbonyl, Isodecyloxycarbonyl, Undecyloxycarbonyl, Dodecyloxycarbonyl (die Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Enzyklopädie der Technischen Chemie, 4. Auflage, Band 7, Seiten 215 bis 217, sowie Band 11, Seiten 435 und 436), 2-Methoxyethoxycarbonyl, 2-Ethoxyethoxycarbonyl, 3,6-Dioxaheptyloxycarbonyl, Acetyloxymethyl, 2-Acetyloxyethyl, 2-(2,2-Dimethylpropionyloxy)ethyl, 2-Decanoyloxyethyl, Benzoyloxymethyl, 2-Benzoyloxyethyl, 2-(3,5-Dimethoxy-4-methylbenzoyloxy)ethyl, 2-(Dimethylphosphinato)ethyl, 2-(Diethylphosphinato)ethyl, 2-(Methyl-ethylphosphinato)ethyl, 3-Ethyl-2-(methyl-ethylphosphinato)propyl, 2-(Diphenylphosphinato)ethyl, N-Methylcarbamoyl, N-Ethylcarbamoyl, N,N-Dimethylcarbamoyl oder N,N-Diethylcarbamoyl.

Reste L sind z.B. Methylen, Ethylen, 1,2- oder 1,3-Propylen, 1,2-, 1,3-, 2,3- oder 1,4-Butylen, Pentamethylen, Hexamethylen, Heptamethylen, Octamethylen, Nonamethylen, Decamethylen, Undecamethylen, Dodecamethylen, Phenylethylen, 1-Phenyl-1,2-propylen oder 2-Phenyl-1,3-propylen.

Bevorzugt sind flüssigkristalline Mischungen, die einen Azulenquadratsäurefarbstoff der Formel I enthalten, in der $R^2$, $R^3$, $R^4$ und $R^5$ jeweils $C_1$-$C_6$-Alkyl bedeuten und $R^1$ die obengenannte Bedeutung besitzt.

Besonders bevorzugt sind flüssigkristalline Mischungen, die einen Azulenquadratsäurefarbstoff der Formel I enthalten, in der $R^2$ und $R^4$ jeweils Methyl und $R^3$ und $R^5$ jeweils Wasserstoff bedeuten und $R^1$ die obengenannte Bedeutung besitzt. Diese Farbstoffe entsprechen der Formel Ia

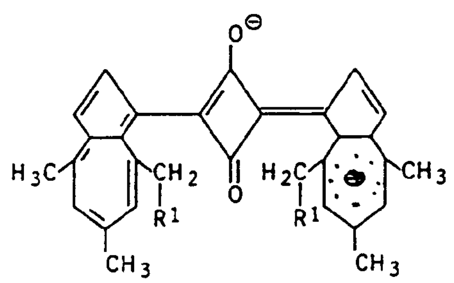

(Ia).

Ganz besonders bevorzugt sind flüssigkristalline Mischungen, die einen Azulenquadratsäurefarbstoff der Formel I enthalten, in der $R^2$ und $R^4$ jeweils Wasserstoff, $R^3$ Isopropyl und $R^5$ Methyl bedeuten und $R^1$ die obengenannte Bedeutung besitzt. Diese Farbstoffe entsprechen der Formel Ib

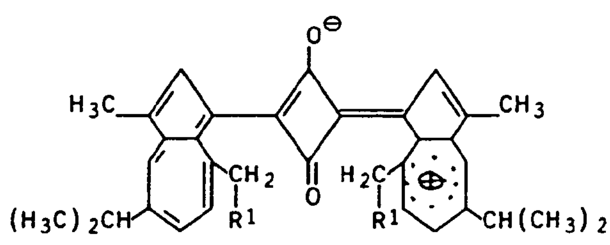

(Ib),

Weiterhin bevorzugt sind flüssigkristalline Mischungen, die einen Azulenquadratsäurefarbstoff der Formel I enthalten, in der $R^1$ $C_1$-$C_{12}$-Alkyl, des durch $C_1$-$C_{12}$-Alkoxycarbonyl substituiert ist, bedeutet. Insbesondere seien diejenigen flüssigkristallinen Mischungen hervorgehoben, die einen Azulenquadratsäurefarbstoff der Formel I enthalten, in der $R^1$ $C_1$-$C_{12}$-Alkoxycarbonylmethyl bedeutet.

Die Azulenquadratsäurefarbstoffe der Formel I und deren Herstellung sind an sich bekannt und z.B. in der älteren Anmeldung EP-A-310 080 sowie in den älteren deutschen Patentanmeldungen P 38 16 068.4 und P 38 16 187.7 beschrieben.

Bei den den erfindungsgemäßen flüssigkristallinen Mischungen zugrundeliegenden Flüssigkristallmassen handelt es sich ebenfalls um an sich bekannte Stoffe, wie sie beispielsweise in Mol. Cryst, Liq. Cryst. Vol. 156, S. 155 ff (1987) beschrieben sind.

Dies sind in der Regel Stoffe, die nematische, cholesterische und/oder smektische Phasen aufweisen. Sie gehören beispielsweise der Klasse der Schiffschen Basen, Biphenyle, Phenylcyclohexane, Cyclohexylcyclohexane, Terphenyle, Cyclohexylbiphenyle, Cyclohexylbiphenylcyclohexane, Pyrimidine, Dioxane, Zimtsäureester, Cholesterinester, p-Alkylbenzoesäureester, Phenylcyclohexylcarbonsäureester, Cyclohexylcyclohexylbenzoesäureester, Cyclohexylphenylcyclohexylcarbonsäureester oder der Cyclohexylcyclohexylcyclohexylcarbonsäureester an.

Solche Flüssigkristallmassen sind handelsüblich und liegen in der Regel als Gemische verschiedener mesogener Komponenten vor.

Die erfindungsgemäßen flüssigkristallinen Mischungen enthalten in der Regel 0,01 bis 20 Gew.-%, vorzugsweise 0.05 bis 10 Gew-%, insbesondere 0,05 bis 5 Gew.-%, jeweils bezogen auf das Gesamtgewicht der flüssigkristallinen Mischungen, eines oder mehrerer Azulenquadratsäurefarbstoffe der Formel I.

Man erhält sie nach an sich bekannter Weise, z.B. durch Vermischen von Farbstoffen und Flüssigkristallmasse, gegebenenfalls unter Erwärmen.

Aufgrund der unerwartet guten Löslichkeit der Azulenquadratsäurefarbstoffe in der Flüssigkristallmasse sowie des guten Ordnungsgrads eignen sich die neuen flüssigkristallinen Mischungen in vorteilhafter Weise zur Herstellung von Flüssigkristalldisplays, in denen durch Bestrahlung mit einem Laserstrahl das Thermo-Schreiben durchgeführt wird.

Die Absorptionsmaxima der Azulenquadratsäurefarbstoffe liegen im Bereich von ca. 700 bis 900 nm, d.h. in der oszillierenden Wellenlänge des Schreiblaserstrahls, wobei außerdem eine hohe Absorption der Energie des Schreiblaserstrahls bewirkt wird.

Die folgenden Beispiele sollen die Erfindung näher erläutern.

Die in der Tabelle 1 genannten Azulenquadratsäurefarbstoffe Nr. 1 bis 44 wurden zur Herstellung der flüssigkristallinen Mischungen verwendet.

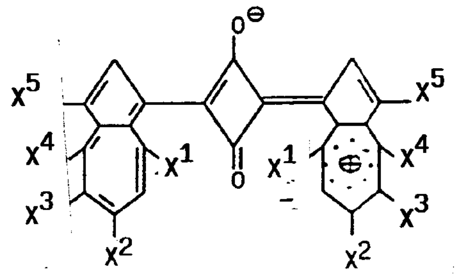

Tabelle 1

| Bsp. Nr. | $X^1$ | $X^2$ | $X^3$ | $X^4$ | $X^5$ |
|---|---|---|---|---|---|
| 1 | $(CH_2)_2CO_2CH_3$ | H | $CH(CH_3)_2$ | H | $CH_3$ |
| 2 | $(CH_2)_2CO_2C_2H_5$ | H | $CH(CH_3)_2$ | H | $CH_3$ |
| 3 | $(CH_2)_2CO_2nC_3H_7$ | H | $CH(CH_3)_2$ | H | $CH_3$ |
| 4 | $(CH_2)_2CO_2iC_3H_7$ | H | $CH(CH_3)_2$ | H | $CH_3$ |
| 5 | $(CH_2)_2CO_2nC_4H_9$ | H | $CH(CH_3)_2$ | H | $CH_3$ |
| 6 | $(CH_2)_2CO_2sC_4H_9$ | H | $CH(CH_3)_2$ | H | $CH_3$ |
| 7 | $(CH_2)_2CO_2nC_8H_{17}$ | H | $CH(CH_3)_2$ | H | $CH_3$ |
| 8 | $(CH_2)_3CO_2CH_3$ | H | $CH(CH_3)_2$ | H | $CH_3$ |

Tabelle 1 (Fortsetzung)

| Bsp. Nr. | $X^1$ | $X^2$ | $X^3$ | $X^4$ | $X^5$ |
|---|---|---|---|---|---|
| 9 | $(CH_2)_3CO_2iC_3H_7$ | H | $CH(CH_3)_2$ | H | $CH_3$ |
| 10 | $(CH_2)_3CO_2nC_4H_9$ | H | $CH(CH_3)_2$ | H | $CH_3$ |
| 11 | $(CH_2)_2CO_2CH_2$— 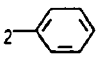 | H | $CH(CH_3)_2$ | H | $CH_3$ |
| 12 | $(CH_2)_2CO_2CH_2CH_2Br$ | H | $CH(CH_3)_2$ | H | $CH_3$ |
| 13 | $CH_2$—$CHCO_2CH_3$<br>\|<br>$CH_3$ | H | $CH(CH_3)_2$ | H | $CH_3$ |
| 14 | $CH_2$—$CHCO_2nC_4H_9$<br>\|<br>$CH_3$ | H | $CH(CH_3)_2$ | H | $CH_3$ |
| 15 | $CH_2$—$CHCO_2CH_3$<br>\|<br>$C_2H_5$ | H | $CH(CH_3)_2$ | H | $CH_3$ |
| 16 | $CH_2$—$CHCO_2C_2H_5$<br>\|<br>$C_2H_5$ | H | $CH(CH_3)_2$ | H | $CH_3$ |
| 17 | $CH_2$—$CHCO_2iC_3H_7$<br>\|<br>$C_2H_5$ | H | $CH(CH_3)_2$ | H | $CH_3$ |
| 18 | $CH_2$—$CHCO_2C_4H_9$<br>\|<br>$C_2H_5$ | H | $CH(CH_3)_2$ | H | $CH_3$ |
| 19 | $CH_2$—$CHCO_2C_2H_5$<br>\|<br>$C_6H_5$ | H | $CH(CH_3)_2$ | H | $CH_3$ |
| 20 | $(CH_2)_2OC(O)CH_3$ | H | $CH(CH_3)_2$ | H | $CH_3$ |
| 21 | $(CH_2)_3OC(O)CH_3$ | H | $CH(CH_3)_2$ | H | $CH_3$ |
| 22 | $(CH_2)_3OC(O)C(CH_3)_3$ | H | $CH(CH_3)_2$ | H | $CH_3$ |
| 23 | $(CH_2)_3OC(O)C_9H_{19}$ | H | $CH(CH_3)_2$ | H | $CH_3$ |
| 24 | $(CH_2)_2OC(O)$— 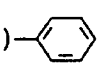 | H | $CH(CH_3)_2$ | H | $CH_3$ |

Tabelle 1 (Fortsetzung)

| Bsp. Nr. | $X^1$ | $X^2$ | $X^3$ | $X^4$ | $X^5$ |
|---|---|---|---|---|---|
| 25 | $(CH_2)_3OC(O)$— 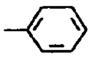 | H | $CH(CH_3)_2$ | H | $CH_3$ |
| 26 | $(CH_2)_3OC(O)$— 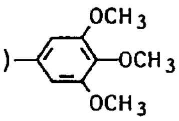 | H | $CH(CH_3)_2$ | H | $CH_3$ |
| 27 | $(CH_2)_3OC(O)NH{-}C_6H_5$ | H | $CH(CH_3)_2$ | H | $CH_3$ |
| 28 | $(CH_2)_3OC(O)NH{-}C_4H_9$ | H | $CH(CH_3)_2$ | H | $CH_3$ |
| 29 | $CH_2CH(CH_3)CH_2OC(O)NH{-}C_4H_9$ | H | $CH(CH_3)_2$ | H | $CH_3$ |
| 30 | $CH_2CH(C_6H_5)CH_2OC(O)NH{-}C_4H_9$ | H | $CH(CH_3)_2$ | H | $CH_3$ |
| 31 | $(CH_2)_3OP(O)(C_6H_5)_2$ | H | $CH(CH_3)_2$ | H | $CH_3$ |
| 32 | $(CH_2)_3OCH_3$ | H | $CH_3$ | H | $CH_3$ |
| 33 | $(CH_2)_2C_6H_5$ | H | $CH_3$ | H | $CH_3$ |
| 34 | $CO_2CO_2CH_3$ | $CH_3$ | H | $CH_3$ | H |
| 35 | $CH_2CO_2C_2H_5$ | $CH_3$ | H | $CH_3$ | H |
| 36 | $CH_2CO_2nC_3H_7$ | $CH_3$ | H | $CH_3$ | H |
| 37 | $CH_2CO_2iC_3H_7$ | $CH_3$ | H | $CH_3$ | H |
| 38 | $CH_2CO_2nC_4H_9$ | $CH_3$ | H | $CH_3$ | H |
| 39 | $(CH_2)_2CO_2CH_3$ | $CH_3$ | H | $CH_3$ | H |
| 40 | $(CH_2)_2CO_2C_2H_5$ | $CH_3$ | H | $CH_3$ | H |
| 41 | $(CH_2)_2CO_2nC_3H_7$ | $CH_3$ | H | $CH_3$ | H |
| 42 | $(CH_2)_2CO_2iC_3H_7$ | $CH_3$ | H | $CH_3$ | H |

Tabelle 1 (Fortsetzung)

| Bsp. Nr. | $X^1$ | $X^2$ | $X^3$ | $X^4$ | $X^5$ | |
|---|---|---|---|---|---|---|
| 43 | $(CH_2)_2CO_2nC_4H_9$ | $CH_3$ | | H | $CH_3$ | H |
| 44 | $(CH_2)_3CO_2nC_4H_9$ | $CH_3$ | | H | $CH_3$ | H |

Die Herstellung der flüssigkristallinen Mischungen, die die Farbstoffe 1 bis 44 enthalten, erfolgte durch Lösung des jeweiligen Farbstoffs im Flüssigkristall. Dazu wurden innerhalb 1 Woche bei Raumtemperatur jeweils 50 mg Farbstoff in 1 ml Flüssigkristall vom Typ ZLI der Firma Merck eingerührt und die gesättigte Lösung dann vom Rückstand abzentrifugiert.

Es wurden dann Ordnungsgrad und Löslichkeit der jeweiligen Farbstoffe im flüssigkristallinen System bestimmt. Die Messungen dazu wurden am Spektralphotometer U 3500 der Firma Hitachi durchgeführt.

Der Ordnungsgrad S wurde dabei nach der bekannten Gleichung

$$S = \frac{CR - 1}{CR + 2}$$

bei Raumtemperatur mit der obengenannten Lösung in handelsüblichen Meßzellen mit homogener Randorientierung (Polyimid, Schichtdicke 10-20 µm) bestimmt. Das dichroitische Verhältnis CR wurde durch Messung der Extinktion E" (Messung mit parallel zur Vorzugsrichtung der nematischen Phase polarisiertem Licht) und $E \perp$ (Messung mit senkrecht zur Vorzugsrichtung der nematischen Phase polarisiertem Licht) nach der Beziehung

$$CR = \frac{E''}{E\perp}$$

ermittelt, wobei die Farbstoffkonzentration so gewählt wurde, daß E" zwischen 1 und 2 lag.

Die Löslichkeit wurde durch Vergleich der Extinktion der gesättigten Lösung der flüssigkristallinen Mischung mit der einer Lösung des jeweiligen Farbstoffs in Methylenchlorid (mit bekannter Konzentration) ermittelt.

In der folgenden Tabelle 2 ist jeweils der Ordnungsgrad S, die Löslichkeit L, das Absorptionsmaximum, gemessen in Methylenchlorid als Lösungsmittel, sowie der Schmelzpunkt der in Tabelle 1 genannten Verbindungen Nr. 1 bis 59 aufgeführt.

Tabelle 2

| Bsp. Nr. | Ordnungsgrad S | Löslichkeit L | λmax [nm] | Schmp. [°C] |
|---|---|---|---|---|
| 1 | 0,55 | 0,26 | 767 | 175- 77 |
| 2 | 0,55 | 0,35 | 767 | 138- 40 |
| 3 | 0,55 | 0,41 | 767 | 144- 46 |
| 4 | 0,57 | 0,22 | 769 | 126- 27 |
| 5 | 0,55 | 0,46 | 767 | 105- 07 |
| 6 | 0,56 | 0,28 | 767 | 108- 10 |
| 7 | 0,55 | 0,49 | 768 | [-öl-] |
| 8 | 0,55 | 0,26 | 767 | ca. 100 |
| 9 | 0,57 | 0,22 | 767 | > 100 |
| 10 | 0,55 | 0,46 | 768 | 144- 45 |
| 11 | 0,57 | 0,22 | 767 | [-öl-] |
| 12 | 0,55 | 0,35 | 767 | 130- 32 |
| 13 | 0,57 | 0,49 | 768 | 220- 21 |
| 14 | 0,56 | 0,46 | 770 | 172- 73 |
| 15 | 0,54 | 0,35 | 768 | 196- 97 |
| 16 | 0,55 | 0,22 | 770 | 185- 87 |
| 17 | 0,56 | 0,26 | 771 | 180- 80 |
| 18 | 0,60 | 0,15 | 770 | 151- 52 |
| 19 | 0,52 | 0,22 | 768 | 215- 17 |
| 20 | 0,55 | 0,27 | 765 | [-öl-] |
| 21 | 0,55 | 0,29 | 765 | [-öl-] |
| 22 | 0,53 | 0,22 | 768 | > 80 |
| 23 | 0,58 | 0,49 | 765 | [-öl-] |
| 24 | 0,54 | 0,26 | 765 | |
| 25 | 0,55 | 0,28 | 768 | 230- 32 |
| 26 | 0,48 | 0,21 | 767 | 183- 85 |
| 27 | 0,54 | 0,11 | 770 | 257- 58 |
| 28 | 0,55 | 0,47 | 770 | 155- 56 |
| 29 | 0,58 | 5,6 | 773 | 185- 87 |
| 30 | 0,35 | 0,45 | 774 | 102 |

Tabelle 2 (Fortsetzung)

| Bsp. Nr. | Ordnungsgrad S | Löslichkeit | λmax [nm] | Schmp. [°C] |
|---|---|---|---|---|
| 31 | 0,28 | 0,40 | 769 | 208- 09 |
| 32 | 0,30 | 0,50 | 763 | [-öl-] |
| 33 | 0,42 | 0,50 | 769 | 219- 25 |
| 34 | 0,63 | 1,00 | 724 | 180-205 |
| 35 | 0,63 | 1,74 | 723 | 155- 62 |
| 36 | 0,63 | 2,42 | 721 | [-öl-] |
| 37 | 0,64 | 1,15 | 723 | 136- 40 |
| 38 | 0,63 | 1,90 | 725 | [-öl-] |
| 39 | 0,63 | 1,26 | 723 | [-öl-] |
| 40 | 0,63 | 1,74 | 722 | 65- 69 |
| 41 | 0,63 | 2,45 | 722 | 140- 42 |
| 42 | 0,65 | 1,00 | 723 | 176- 77 |
| 43 | 0,63 | 1,90 | 723 | [-öl-] |
| 44 | 0,63 | 1,74 | 726 | [-öl-] |

## Patentansprüche

1. Flüssigkristalline Mischungen, enthaltend eine Flüssigkristallmasse und einen Azulenquadratsäurefarbstoff der Formel I

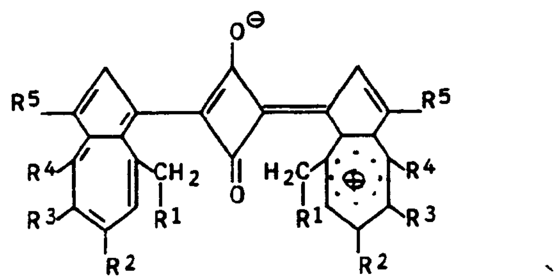

(I),

in der

$R^1$ $C_1$-$C_{12}$-Alkyl, das durch Halogen, Amino, Hydroxy, $C_1$-$C_{12}$-Alkoxy, Phenyl, durch $C_1$-$C_4$-Alkyl, $C_1$-$C_4$-Alkoxy, $C_1$-$C_4$-Dialkylamino, N-Phenyl-N-($C_1$-$C_4$-alkyl)amino oder Halogen, substituiertes Phenyl, Carboxyl, $C_1$-$C_{12}$-Alkoxycarbonyl, $C_1$-$C_{12}$-Halogenalkoxycarbonyl, $C_1$-$C_{12}$-Phenylalkoxycarbonyl, Cyano, $C_1$-$C_{12}$-Alkanoyloxy, Benzoyloxy, durch $C_1$-$C_4$-Alkyl, $C_1$-$C_4$-Alkoxy, $C_1$-$C_4$-Dialkylamino, N-Phenyl-N-($C_1$-$C_4$-alkyl)amino oder Halogen, substituiertes Benzoyloxy und/oder den Rest

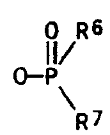

substituiert ist, wobei $R^6$ und $R^7$ gleich oder verschieden sind und unabhängig voneinander jeweils für $C_1$-$C_4$-Alkyl oder Phenyl stehen, Carboxyl, $C_1$-$C_{12}$-Alkoxycarbonyl, wobei die Alkylkette gegebenenfalls durch ein oder mehrere Sauerstoffatome unterbrochen ist, Carbamoyl, $C_1$-$C_4$-Mono- oder Dialkylcarbamoyl oder den Rest

L-O-CO-NH-$R^8$ ,

wobei L für $C_1$-$C_{12}$-Alkylen, das gegebenenfalls durch Phenyl substituiert ist, und $R^8$ für $C_1$-$C_{20}$-Alkyl, $C_5$-$C_7$-Cycloalkyl, Phenyl oder durch $C_1$-$C_4$-Alkyl, $C_1$-$C_4$-Alkoxy, $C_1$-$C_4$-Dialkylamino, N-Phenyl-N-($C_1$-$C_4$-alkyl)amino oder Halogen, substituiertes Phenyl stehen, und

$R^2$, $R^3$, $R^4$ und $R^5$ gleich oder verschieden sind und unabhängig voneinander jeweils Wasserstoff oder $C_1$-$C_{12}$-Alkyl, das gegebenenfalls durch Halogen, Amino, $C_1$-$C_{12}$-Alkoxy, Phenyl, durch $C_1$-$C_4$-Alkyl, $C_1$-$C_4$-Alkoxy, $C_1$-$C_4$-Dialkylamino, N-Phenyl-N-($C_1$-$C_4$-alkyl)amino oder Halogen, substituiertes Phenyl, Carboxyl, $C_1$-$C_{12}$-Alkoxycarbonyl oder Cyano substituiert ist, bedeuten,

mit der Maßgabe, daß wenn $R^5$ Wasserstoff bedeutet, an einem oder beiden Azulenringen die Ringpositionen der Substituenten $CH_2$-$R^1$ und $R^4$ innerhalb eines Azulenrings auch gegeneinander vertauscht sein können und daß $R^1$ auch Wasserstoff bedeutet, wenn $R^5$ für Methyl oder Ethyl, das jeweils durch Phenyl oder durch $C_1$-$C_4$-Alkyl, $C_1$-$C_4$-Alkoxy, $C_1$-$C_4$-Dialkylamino, N-Phenyl-N-($C_1$-$C_4$-alkyl)amino oder Halogen, substituiertes Phenyl substituiert ist, oder für $C_3$-$C_{12}$-Alkyl steht oder wenn mindestens einer der beiden Reste $R^2$ und $R^4$ für Phenyl oder durch $C_1$-$C_4$-Alkyl, $C_1$-$C_4$-Alkoxy, $C_1$-$C_4$-Dialkylamino, N-Phenyl-N-($C_1$-$C_4$-alkyl)amino oder Halogen, substituiertes Phenyl steht.

2. Flüssigkristalline Mischungen gemäß Anspruch 1, dadurch gekennzeichnet, daß $R^2$, $R^3$, $R^4$ und $R^5$ jeweils $C_1$-$C_6$-Alkyl bedeuten und $R^1$ die in Anspruch 1 genannte Bedeutung besitzt.

3. Flüssigkristalline Mischungen gemäß Anspruch 1, dadurch gekennzeichnet, daß $R^2$ und $R^4$ jeweils Methyl und $R^3$ und $R^5$ jeweils Wasserstoff bedeuten und $R^1$ die in Anspruch 1 genannte Bedeutung besitzt.

4. Flüssigkristalline Mischungen gemäß Anspruch 1, dadurch gekennzeichnet, daß $R^2$ und $R^4$ jeweils Wasserstoff, $R^3$ Isopropyl und $R^5$ Methyl bedeuten und $R^1$ die in Anspruch 1 genannte Bedeutung besitzt.

5. Verwendung der flüssigkristallinen Mischungen gemäß Anspruch 1 zur Herstellung von Flüssigkristalldisplays.

## Claims

1. A liquid-crystalline mixture comprising a liquid crystal composition and an azulenesquaric acid dye of the formula I

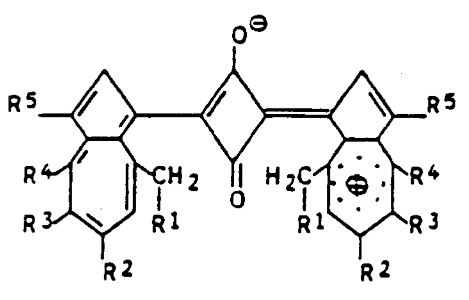

(I)

where

$R^1$ is $C_1$-$C_{12}$-alkyl which is substituted by halogen, amino, hydroxyl, $C_1$-$C_{12}$-alkoxy, phenyl, $C_1$-$C_4$-alkyl-, $C_1$-$C_4$-alkoxy-, $C_1$-$C_4$-dialkylamino-, N-phenyl-N-($C_1$-$C_4$-alkyl)amino- or halogen-substituted phenyl, carboxyl, $C_1$-$C_{12}$-alkoxycarbonyl, $C_1$-$C_{12}$-haloalkoxycarbonyl, $C_1$-$C_{12}$-phenylalkoxycarbonyl, cyano, $C_1$-$C_{12}$-alkanoyloxy, benzoyloxy, $C_1$-$C_4$-alkyl-, $C_1$-$C_4$-alkoxy-, $C_1$-$C_4$-dialkylamino-, N-phenyl-N-($C_1$-$C_4$-alkyl)amino- or halogen-substituted benzoyloxy and/or the radical

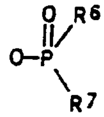

where $R^6$ and $R^7$ are identical or different and are each independently of the other $C_1$-$C_4$-alkyl or phenyl, or is carboxyl, $C_1$-$C_{12}$-alkoxycarbonyl, where the alkyl chain may be interrupted by one or more oxygen atoms, carbamoyl, $C_1$-$C_4$-monoalkylcarbamoyl, $C_1$-$C_4$-dialkylcarbamoyl or the radical

L-O-CO-NH-$R^8$ ,

where L is $C_1$-$C_{12}$-alkylene which may be substituted by phenyl and $R^8$ is $C_1$-$C_{20}$-alkyl, $C_5$-$C_7$-cycloalkyl, phenyl or $C_1$-$C_4$-alkyl-, $C_1$-$C_4$-alkoxy-, $C_1$-$C_4$-dialkylamino-, N-phenyl-N-($C_1$-$C_4$-alkyl)amino- or halogen-substituted phenyl, and

$R^2$, $R^3$, $R^4$ and $R^5$ are identical or different and are each independently of the others hydrogen or $C_1$-$C_{12}$-alkyl which may be substituted by halogen, amino, $C_1$-$C_{12}$-alkoxy, phenyl, $C_1$-$C_4$-alkyl-, $C_1$-$C_4$-alkoxy-, $C_1$-$C_4$-dialkylamino-, N-phenyl-N-($C_1$-$C_4$-alkyl)amino- or halogen-substituted phenyl, carboxyl, $C_1$-$C_{12}$-alkoxy-carbonyl or cyano, with the proviso that when $R^5$ is hydrogen the positions of the substituents $CH_2$-$R^1$ and $R^4$ within an azulene ring can also be interchanged for either or both azulene rings and that $R^1$ is also hydrogen when $R^5$ is methyl or ethyl which may each be substituted by phenyl or $C_1$-$C_4$-alkyl-, $C_1$-$C_4$-alkoxy-, $C_1$-$C_4$-dialkylamino-, N-phenyl-N-($C_1$-$C_4$-alkyl)amino- or halogen-substituted phenyl or is $C_3$-$C_{12}$-alkyl, or when at least one of the two radicals $R^2$ and $R^4$ is phenyl or $C_1$-$C_4$-alkyl-, $C_1$-$C_4$-alkoxy-, $C_1$-$C_4$-dialkylamino-, N-phenyl-N-($C_1$-$C_4$-alkyl)amino- or halogen-substituted phenyl.

2. A liquid-crystalline mixture as claimed in claim 1, wherein $R^2$, $R^3$, $R^4$ and $R^5$ are each $C_1$-$C_6$-alkyl and $R^1$ is as defined in claim 1.

3. A liquid-crystalline mixture as claimed in claim 1, wherein $R^2$ and $R^4$ are each methyl, $R^3$ and $R^5$ are each hydrogen and $R^1$ is as defined in claim 1.

4. A liquid-crystalline mixture as claimed in claim 1, wherein $R^2$ and $R^4$ are each hydrogen, $R^3$ is isopropyl, $R^5$ is methyl and $R^1$ is as defined in claim 1.

5. The use of a liquid-crystalline mixture as claimed in claim 1 for fabricating liquid crystal displays.

## Revendications

1. Mélanges cristallins liquides, contenant une masse cristalline liquide et un colorant acide azulène-squarylique de formule

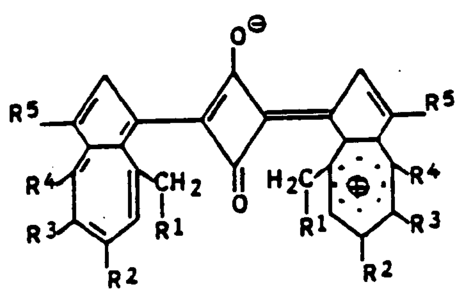

(I),

dans laquelle

$R^1$ représente un reste alkyle en $C_1$-$C_{12}$ qui est substitué par un atome d'halogène, par un groupement amino, hydroxy, alcoxy en $C_1$-$C_{12}$, phényle, phényle substitué par un radical alkyle en $C_1$-$C_4$, alcoxy en $C_1$-$C_4$, di (alkyl en $C_1$-$C_4$)amino, N-phényl-N-(alkyl en $C_1$-$C_4$)amino ou halogéno, par un groupement carboxyle, (alcoxy en $C_1$-$C_{12}$) carbonyle, (halogéno-alcoxy en $C_1$-$C_{12}$) carbonyle, phényl (alcoxy en $C_1$-$C_{12}$) carbonyle, cyano, alcanoyloxy en $C_1$-$C_{12}$, benzoyloxy, benzoyloxy substitué par un radical alkyle en $C_1$-$C_4$, alcoxy en $C_1$-$C_4$, di (alkyl en $C_1$-$C_4$)amino, N-phényl-N-(alkyl en $C_1$-$C_4$)amino ou halogéno, et/ou

par le reste

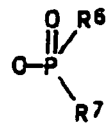

$R^6$ et $R^7$ étant identiques ou différents et étant mis chacun, indépendamment l'un de l'autre, pour un reste alkyle en $C_1$-$C_4$ ou phényle, $R^1$ pouvant aussi représenter un reste carboxy, (alcoxy en $C_1$-$C_{12}$)carbonyle, où la chaîne alkyle est éventuellement interrompue par un ou plusieurs atomes d'oxygène, carbamoyle, mono- ou di(alkyl en $C_1$-$C_4$)carbamoyle ou le reste

L-O-CO-NH-$R^8$,

dans lequel L est mis pour un reste alkylène en $C_1$-$C_{12}$ qui est éventuellement substitué par un groupement phényle, et $R^8$ est mis pour un reste alkyle en $C_1$-$C_{20}$, cycloalkyle en $C_5$-$C_7$, phényle ou phényle substitué par un groupement alkyle en $C_1$-$C_4$, alcoxy en $C_1$-$C_4$, di(alkyl en $C_1$-$C_4$)amino, N-phényl-N-(alkyl en $C_1$-$C_4$)amino ou halogéno, et

$R^2$, $R^3$, $R^4$ et $R^5$ sont identiques ou différents et représentent chacun, indépendamment les uns des autres, un atome d'hydrogène ou un reste alkyle en $C_1$-$C_{12}$ qui est éventuellement substitué par un atome d'halogène ou un groupement amino, alcoxy en $C_1$-$C_{12}$, phényle, phényle substitué par un groupement alkyle en $C_1$-$C_4$, alcoxy en $C_1$-$C_4$, di(alkyl en $C_1$-$C_4$)amino, N-phényl-N-(alkyl en $C_1$-$C_4$)amino ou halogéno, par un groupement carboxyle, (alcoxy en $C_1$-$C_{12}$)carbonyle ou cyano,

étant spécifié que quand $R^5$ représente un atome d'hydrogène, sur l'un ou l'un et l'autre des noyaux azulène, les positions des substituants $CH_2$-$R^1$ et $R^4$ peuvent être interverties mutuellement dans un noyau azulène,

et que $R^1$ représente aussi un atome d'hydrogène lorsque $R^5$ est mis pour un reste méthyle ou éthyle qui est substitué chaque fois par un groupement phényle ou phényle substitué par un groupement alkyle en $C_1$-$C_4$, alcoxy en $C_1$-$C_4$, di(alkyl en $C_1$-$C_4$)amino, N-phényl-N-(alkyl en $C_1$-$C_4$)amino ou halogéno, ou pour un reste alkyle en $C_3$-$C_{12}$, ou lorsque l'un au moins des deux restes $R^2$ et $R^4$ est mis pour un groupement phényle ou phényle substitué par un groupement alkyle en $C_1$-$C_4$, alcoxy en $C_1$-$C_4$, di(alkyl en $C_1$-$C_4$)amino, N-phényl-N-alkyl (en $C_1$-$C_4$)amino ou halogéno.

2. Mélanges cristallins liquides selon la revendication 1, caractérisés en ce que $R^2$, $R^3$, $R^4$ et $R^5$ représentent chacun un reste alkyle en $C_1$-$C_6$ et $R^1$ a la signification indiquée dans la revendication 1.

3. Mélanges cristallins liquides selon la revendication 1, caractérisés en ce que $R^2$ et $R^4$ représentent chacun un reste méthyle, $R^3$ et $R^5$ représentent chacun un atome d'hydrogène et $R^1$ a la signification indiquée dans la revendication 1.

4. Mélanges cristallins liquides selon la revendication 1, caractérisés en ce que $R^2$ et $R^4$ représentent chacun un atome d'hydrogène, $R^3$ représente un reste isopropyle, $R^5$ représente un reste méthyle et $R^1$ a la signification indiquée dans la revendication 1.

5. Utilisation des mélanges cristallins liquides selon la revendication 1 pour la fabrication d'éléments d'affichage à cristaux liquides.